# EUROPÄISCHE PATENTANMELDUNG

(11) **EP 3 835 684 A1**
(43) Veröffentlichungstag der Anmeldung: **16.06.2021**
(21) Anmeldenummer: 20000420.8
(22) Anmeldetag: 20.11.2020
(51) Int. Cl.: F24S 40/20, B08B 1/04, H02S 40/10

(54) **SELBSTFAHRENDES REINIGUNGSGERÄT ZUM BEFAHREN UND REINIGEN VON SOLAR-MODULEN**

(30) Priorität: 12.12.2019 DE 202019005076 U
(71) Anmelder: Staudinger GmbH, 87730 Bad Grönenbach (DE)
(72) Erfinder: Staudinger, Hermann, 87730 Bad Grönenbach (DE)

(57) **Zusammenfassung**

Die Erfindung betrifft ein selbstfahrendes Reinigungsgerät (1), das zum Befahren und Reinigen der zur Sonne gerichteten Oberflächen von Solarmodulen (13) geeignet ist, mit einer motorisch angetriebenen Fahrvorrichtung (2) und mit einer Reinigungsvorrichtung (7), die zum Reinigen verschmutzter Solarmodule (13) bestimmt ist, wobei die Reinigungsvorrichtung (7) eine Wasseranschlusseinrichtung (15) aufweist.
Die Erfindung zeichnet sich dadurch aus, dass die Reinigungsvorrichtung (7) wenigstens einen um eine vertikale Achse (6) bewegbaren, von innen nach außen führenden Arm (8) aufweist, der über den Grundriss der Fahrvorrichtung (2) hinausragt und der an seinem Endbereich (9) mit wenigstens einem Reinigungselement (10) ausgestattet ist, wobei die Wasseranschlusseinrichtung (15) auf der vertikalen Achse (6) angeordnet ist und die Reinigungsvorrichtung (7) entweder über einen eigenen motorischen Antrieb verfügt oder durch den Bewegungsvorgang der Fahrvorrichtung (2) angetrieben wird.

Die Erfindung betrifft ferner ein gleiches Reinigungsgerät (1), jedoch ohne Wasseranschlusseinrichtung (15).

## Beschreibung

Die Erfindung betrifft ein selbstfahrendes Reinigungsgerät, das zum Befahren und Reinigen der zur Sonne gerichteten Oberflächen von Solarmodulen geeignet ist, mit einer motorisch angetriebenen Fahrvorrichtung und mit einer Reinigungsvorrichtung, die zum Reinigen verschmutzter Solarmodule bestimmt ist, wobei die Reinigungsvorrichtung eine Wasseranschlusseinrichtung aufweist.

Die Erfindung betrifft ferner das gleiche Reinigungsgerät, jedoch ohne Wasseranschlusseinrichtung.

Das Dokument EP 2 514 533 B1 des Anmelders beschreibt ein derartiges Reinigungsgerät. Dieses Gerät ist insbesondere dazu vorgesehen, relativ steil angeordnete Solarmodule, wie diese bei Dächern anzufinden sind, befahren und reinigen zu können. Auf so genannten "Solarfeldern" befindliche Solarmodule sind meist weniger geneigt angeordnet und lassen in ihrer Vielzahl großflächige Anordnungen von Solarmodulen entstehen, die natürlich ebenfalls kostengünstig gereinigt werden sollen. Das vorab erwähnte Reinigungsgerät ist durchaus in der Lage, solche großen Flächen zu reinigen, doch ist der dafür erforderliche Zeitaufwand nicht unerheblich.
Um diesen Zeitaufwand zu verringern wird die Möglichkeit genutzt, an Schlepperfahrzeugen befindliche, schräg angeordnete Reinigungsbürsten zu verwenden, wobei die Schlepperfahrzeuge auf den Solarfeldern zwischen den einzelnen freien Reihen der Solarmodule fahren und so mit den wasserversorgten Bürsten die Solarmodule reinigen. Letzteres ist jedoch nur dann möglich, wenn die freien Reihen auch breit genug sind.
Es ist verständlich, auf einer bestimmten Fläche so viel Solarmodule als möglich vorzusehen, um die Stromertragssituation zu steigern. Dies führt immer mehr dazu, dass die vorab beschriebenen Reihen schmäler gemacht werden mit der Folge, dass derartige Reihen nicht mehr mit Schlepperfahrzeugen befahren werden können.

Ausgehend von diesem Sachverhalt besteht die Aufgabe der Erfindung darin, ein Reinigungsgerät der eingangs genannten Art so weiterzuentwickeln, dass dieses beim Fahren auf den Solarmodulen in der Lage ist, in gleicher Zeiteinheit größere Flächen zu reinigen als dies bisher mit bekannten Geräten möglich ist.

Die Lösung der Aufgabe ist jeweils im kennzeichnenden Teil der Ansprüche 1 und 2 beschrieben.

Der Vorteil der Erfindung besteht darin, dass es mit der aufgefundenen Lösung möglich ist, beim Befahren der Solarmodule und in gleicher Zeiteinheit, relativ große Flächenbereiche mit einer größeren Breite als dies bisher möglich war, zu reinigen, weil der Durchmesser der wenigstens einen Reinigungsvorrichtung wesentlich größer gewählt werden kann als die Breite oder Länge des Reinigungsgeräts. Dieser Vorteil lässt sich mit den üblichen, aus Drehbürsten gebildeten Reinigungsvorrichtungen nicht erzielen, weil diese um eine horizontale Achse drehbaren Bürsten ab einer gewissen Länge zu schwer werden und gleichzeitig das Reinigungsergebnis, so die Erfahrung, mangelhaft wird.
Als Reinigungselemente für die vorgeschlagene Lösung bieten sich streifenartige, nach unten hängende Lappen ebenso an wie Bürsten, die mit ihren weichen Borsten an den Solarmodulen aufliegen und ebenso wie die Lappen auf der Oberfläche der Solarmodule bevorzugt im Kreis bewegt werden. Es erweist sich als zweckmäßig, das wenigstens eine Reinigungselement pro Arm, wie nachfolgend noch genauer beschrieben, in einem Winkel zur radialen Ausrichtung eines jeden Arms der Reinigungsvorrichtung anzuordnen. Dadurch lassen sich Schläge vermeiden, die dann auftreten könnten, wenn die Reinigungselemente mit voller Fläche auf die Ränder der Solarmodule anschlagen würden.

Die Erfindung wird anhand eines bevorzugten und schematisch dargestellten Ausführungsbeispiels näher erläutert. Es zeigt
Fig. 1 ein selbstfahrendes Reinigungsgerät in Draufsicht sowie
Fig. 2 das gleiche Gerät in Frontalansicht.

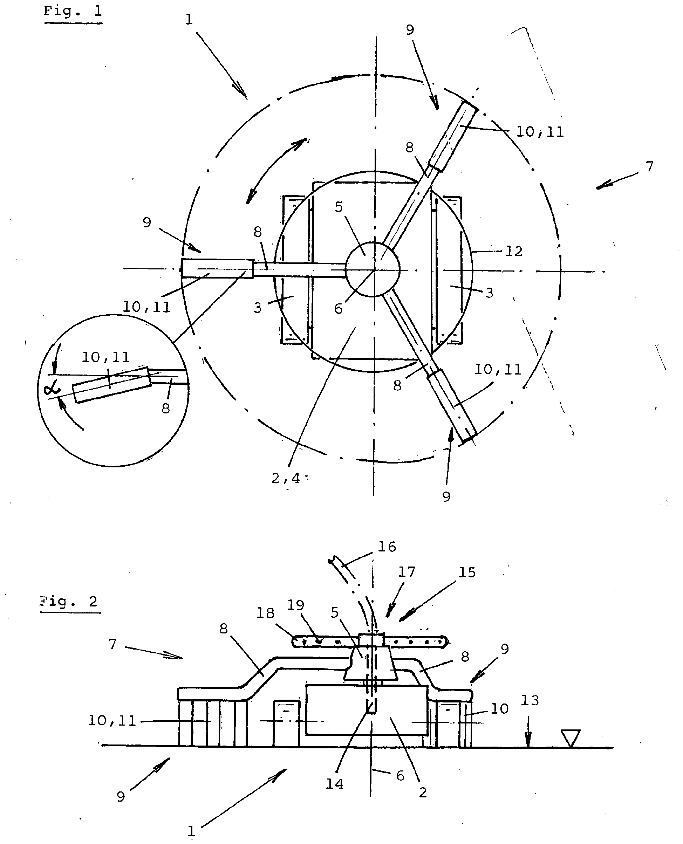

Das in Fig. 1 in Draufsicht dargestellte selbstfahrende Reinigungsgerät 1 weist eine motorisch angetriebene Fahrvorrichtung 2 auf. Üblich ist ein elektromotorischer Antrieb oder ein Antrieb mit Benzinmotor. Die Fahrvorrichtung 2 kann Fortbewegungsmittel 3 in Form von Rädern oder Walzen oder Endlosketten, letztere ähnlich eines Raupenfahrzeugs aufweisen und sind zum Fahren oder Bewegen auf den Solarmodulen 13 vorgesehen. Der Antrieb für die Fahrvorrichtung 2 ist zweckmäßigerweise per Funkeinrichtung ansteuerbar. Die Fahrvorrichtung 2 weist ein Rahmengestell 4 auf, auf dem exakt oder annähernd mittig oder allgemein zentral eine Reinigungsvorrichtung 7 angeordnet ist. Die Reinigungsvorrichtung 7 ist mit dem Rahmengestell 4 entweder verschraubt oder wahlweise vom Rahmengestell 4 abnehmbar an diesem angeordnet. Die Reinigungsvorrichtung 7 verfügt entweder über einen eigenen motorischen Antrieb, bevorzugt elektromotorischer Art oder die Reinigungsvorrichtung 7 kann auch mittels geeigneter Getriebeeinrichtungen mit der Fahrvorrichtung 2 so verbunden sein, dass durch den Bewegungsvorgang der Fahrvorrichtung 2 die Reinigungsvorrichtung 7 in Bewegung versetzt wird. Die Reinigungsvorrichtung 7 ist auf dem Rahmengestell 4 um eine vertikale oder annähernd vertikale Achse 6 bewegbar gelagert. Die Reinigungsvorrichtung 7 weist einen nach oben endenden Tragkopf 5 auf, an dem zumindest ein oder zwei, im Beispiel sind es drei, vom Tragkopf 5 oder von der vertikalen Achse 6 ausgehende, von innen nach außen führende, also radial nach außen sich erstreckende Arme 8, die ortsfest oder, zum Zweck eines raumsparenden Transports des Reinigungsgeräts 1, auch leicht abnehmbar am Tragkopf 5 angeordnet sind, und die sich beim Gebrauch auf einer geschlossenen Kreisbahn (360°) bewegen. Jeder freie Endbereich 9 eines Arms 8 ist mit wenigstens einem Reinigungselement 10 ausgestattet. Als Reinigungselemente 10 bieten sich aus geeignetem textilem Werkstoff bestehende, nach unten hängende Lappen 11 oder mit weichen Borsten ausgestattete Bürsten 11 an. Die Arme 8 erstrecken sich über den Grundriss der Fahrvorrichtung 2 hinaus. Die Arme 8 können durch einen horizontal angeordneten ringförmigen Rahmen 12 verbunden sein, um eine größere Stabilität der so geschaffenen Anordnung zu erreichen. Der Querschnitt der Arme 8 kann rohrförmig oder U-förmig ausgebildet sein. Die Arme 8 können sich nach außen verjüngen, um eine Gewichtsersparnis und eine Belastungsreduzierung an den Armen 8 zu erzielen. Jedes wenigstens eine Reinigungselement 10 kann einzeln oder in seiner Gesamtheit in einem Winkel, siehe Winkel Apha, oder leicht bogenförmig zum jeweiligen, radial nach außen sich erstreckenden Arm 8 angeordnet sein, siehe links im Kreis dargestellte Einzelheit. Da es sich beim Reinigungsvorgang der Solarmodule 13 nicht vermeiden lässt, dass die Reinigungselemente 10 an die oben liegenden metallischen Rahmenkanten der Solarmodule 13 anstoßen, ist es von Vorteil, die eben beschriebene winklige oder bogenförmige Anordnung der Reinigungselemente 10 zu wählen. Auf diese Weise prallen die Reinigungselemente 10 nicht mit ihrer Gesamtheit unvermittelt auf diese Kanten der Solarmodule 13, sondern sie stoßen beim Bewegen der Reinigungsvorrichtung 7 nach und nach an den Kanten an, beispielsweise vergleichbar mit einem ziehenden Schnitt bei bekannten Schneidvorrichtungen. Auf diese Weise wird ein gleichmäßiges und ruhiges Verhalten des Reinigungsgeräts 1 beim Reinigungsvorgang ermöglicht. Der in der Zeichnung dargestellte gestrichelte Kreis vermittelt den Wirkungsbereich des Reinigungsgeräts 1, wenn dessen Reinigungsvorrichtung 7 sich im Gebrauch komplett um die vertikale Achse 6 dreht. Der Wirkungsbereich erstreckt sich wesentlich über die Grundrissfläche der Fahrvorrichtung 2 hinaus. Im Beispiel sind bevorzugt drei geometrisch gleich angeordnete Arme 8 vorgesehen, also eine ungerade Zahl, um ein schädliches Schwingungsverhalten beim Betrieb des Reinigungsgeräts 1 zu vermeiden. Demzufolge können auch fünf Arme 8 gewählt werden, wobei diese bevorzugten Ausführungsbeispiele nicht ausschließen, dass auch ein, zwei oder vier Arme 8, bei entsprechender Wahl der Mittel zu einer Schwingungs- oder Vibrationsvermeidung möglich sind. Es ist eine Wasseranschlusseinrichtung 15 vorgesehen, mit deren Hilfe sich das Reinigungsgerät 1 mit Wasser zum Reinigen der Solarmodule 13 versorgen lässt, siehe Fig. 2. Die Wasseranschlusseinrichtung 15 ist im Beispiel oberhalb der Arme 8 gelegen, auf dem Tragkopf 5 und demnach auf der vertikalen Achse 6 angeordnet.

Fig. 2 zeigt in einer Frontalansicht das in Fig. 1 beschriebene Reinigungsgerät 1. Auf eine weitere Beschreibung der Fahrvorrichtung 2 wird verzichtet, da der Stand der Technik verschiedene Ausführungsformen zulässt. Die Zeichnung geht wieder von drei Armen 8 aus, so dass der links dargestellte Arm 8 in seiner vollen Länge und der rechts dargestellte Arm 8 entsprechend verkürzt dargestellt sind. Die Arme 8 können sich horizontal nach außen erstrecken. Sie können nach außen auch leicht nach unten geneigt sein. Es ist eine nach unten abgeknickte Ausführung dargestellt. Im Beispiel sind die Reinigungselemente 10 durch nach unten hängende Lappen 11 gebildet, die ein- oder mehrreihig angeordnet sein können. Die Wasseranschlusseinrichtung 15 ist, wie aus der Zeichnung ersichtlich, auf der vertikalen Achse 6 der Reinigungsvorrichtung 7 angeordnet. An der Wasseranschlusseinrichtung 15 ist ein eigenständiger Wasserschlauch 16 angeschlossen. Die zum Antrieb der Reinigungsvorrichtung 7 erforderliche, auf der vertikalen Achse gelegene und in der Zeichnung nicht dargestellte Antriebswelle ist im Beispiel als Hohlwelle gestaltet, in deren Inneren ein ortsfest angeordnetes, auf der vertikalen Achse befindliches, nicht drehbares stabförmiges Teil 14 nach oben geführt ist und über den Tragkopf 5 hinausragt. Auf das Tragteil 14 ist ein zur Wasseranschlusseinrichtung 15 gehörendes wasserführendes Endstück 17 aufgesetzt. Das im aufgesetzten Zustand gegen Bewegen oder Drehen gesicherte Endstück 17 trägt im Beispiel drei horizontal und radial angeordnete Rohrstücke, die als Wasserannahmestellen mit einer als ringförmiges Rohrstück gebildeten Wassersprüheinrichtung 18 so verbunden sind, dass Wasser vom Wasserschlauch 16 zur Wasseranschlusseinrichtung 15 geführt und von dort durch das wasserführende Endstück 17, auf die drei Rohrstücke verteilt, zur Wassersprüheinrichtung 18 gelangen kann. Die Wassersprüheinrichtung 18 weist Öffnungen 19 auf, durch die das Wasser austreten und die Solarmodule besprengen kann.

Die Wasseranschlusseinrichtung 15 kann in unterschiedlichen Bauweisen vorliegen. So kann die Wasseranschlusseinrichtung 15 derart gestaltet sein, dass diese auf dem dreh- oder bewegbaren Tragkopf 5 und ebenfalls auf der vertikalen Achse 6 befindlich angeordnet ist und dass von dort aus Wasser an die Wassersprüheinrichtung 18 verteilt wird. An den Endbereichen 9 der Arme 8 befinden sich wieder Öffnungen 19, durch die das Wasser nach außen abgegeben wird. Bei dieser Lösung befindet sich die Wasseranschlusseinrichtung 15 oberhalb der Arme 8 und auf der vertikalen Achse 6 angeordnet. Anstelle des ringförmigen Rohrstücks 18 können auch andere Rohrstückformen gewählt werden, beispielsweise halbkreisförmige oder solche, bei denen die Öffnungen 19 nicht gleichmäßig angeordnet sind. Die Wasseranschlusseinrichtung 15 kann unter Verwendung bekannter technischer Mittel auch so angeordnet und gestaltet sein, dass die Wasserzuführung durch den sich drehenden Tragkopf 5 hindurchgeführt ist und von dort aus, also unterhalb des Tragkopfs gelegen, das Wasser an entsprechende Verteilereinrichtungen weitergegeben wird.

Die Erfindung ist gemäß der bisherigen Beschreibung von mindestens zwei Armen 8 ausgegangen. Dennoch ist es möglich, die Reinigungsvorrichtung 7 eines selbstfahrenden Reinigungsgeräts 1 auch mit nur einem Arm 8 auszustatten und diesen, um Unwuchten bei kreisförmigen Bewegungen zu vermeiden, auf geeignete Weise mit einem Gegengewicht auszustatten.
Wird der Arm 8 nach Art eines Kfz-Scheibenwischers, also oszillierend bewegt, ist es ratsam dafür zu sorgen, dass auf die Reinigungsvorrichtung 7 immer dann ein geeigneter Gegenimpuls einwirkt, wenn der Arm 8 die jeweilige Richtung wechselt, um Schlingerbewegungen des Reinigungsgeräts 1 beim Reinigungsvorgang zu verhindern. Bei diesem Ausführungsbeispiel braucht die Wasseranschlusseinrichtung 15 nicht unbedingt auf der vertikalen Achse 6 angeordnet zu sein. Vielmehr kann sich die Wasseranschlusseinrichtung 15 auch in jenem Bereich des Reinigungsgeräts 1 befinden, der sich außerhalb des sich bewegenden Arms 8, also nicht in dessen beanspruchten Wirkbereich befindet. Dies gilt für alle Ausführungsformen von Reinigungsgeräten 1, bei denen der Arm 8 beim Reinigungsvorgang keine geschlossenen Kreisbewegungen ausführt.
Wie bereits angedeutet kann der wenigstens eine Arm 8 über eine bekannte, von Hand lösbare Steckkupplung mit dem Tragkopf 5 verbunden sein.

Dadurch ist es möglich, das Reinigungsgerät 1 platz- und raumsparend zu transportieren. Nach erfolgtem Transport lässt sich der wenigstens eine Arm 8, oder die Arme 8, erneut auf den Tragkopf 5 so aufstecken, dass die Wasserversorgung für die Reinigungselemente 10 wieder gesichert ist.

Entgegen der bisherigen Beschreibung ist es durchaus möglich, ein Reinigungsgerät 1 auch ohne Wasseranschlusseinrichtung 15 zu entwickeln und herzustellen. Solche Reinigungsgeräte 1 können in Wüstengebieten Verwendung finden, in denen Wasser Mangelware ist und die Solarmodule deshalb mit Hilfe von besonderen Reinigungselementen 10 auch ohne Wasser vom Flugsand befreit werden. Das in Anspruch 2 vorliegende Reinigungsgerät verwendet sämtliche technischen Merkmale, die zuvor in Fig. 1 und 2 beschrieben worden sind, mit Ausnahme der Wasseranschlusseinrichtung 15 und der Wassersprüheinrichtung 18.

## Patentansprüche

1. Selbstfahrendes Reinigungsgerät (1), das zum Befahren und Reinigen der zur Sonne gerichteten Oberflächen von Solarmodulen (13) geeignet ist, mit einer motorisch angetriebenen Fahrvorrichtung (2) und mit einer Reinigungsvorrichtung (7), die zum Reinigen verschmutzter Solarmodule (13) bestimmt ist, wobei die Reinigungsvorrichtung (7) eine Wasseranschlusseinrichtung (15) aufweist, **dadurch gekennzeichnet, dass** die Reinigungsvorrichtung (7) wenigstens einen um eine vertikale Achse (6) bewegbaren, von innen nach außen führenden Arm (8) aufweist, der über den Grundriss der Fahrvorrichtung (2) hinausragt und der an seinem Endbereich (9) mit wenigstens einem Reinigungselement (10) ausgestattet ist, wobei die Wasseranschlusseinrichtung (15) auf der vertikalen Achse (6) angeordnet ist und die Reinigungsvorrichtung (7) entweder über einen eigenen motorischen Antrieb verfügt oder durch den Bewegungsvorgang der Fahrvorrichtung (2) angetrieben wird.

2. Selbstfahrendes Reinigungsgerät (1), das zum Befahren und Reinigen der zur Sonne gerichteten Oberflächen von Solarmodulen (13) geeignet ist, mit einer motorisch angetriebenen Fahrvorrichtung (2) und mit einer Reinigungsvorrichtung (7), die zum Reinigen verschmutzter , Solarmodule (13) bestimmt ist, **dadurch gekennzeichnet, dass** die Reinigungsvorrichtung (7) wenigstens einen um eine vertikale Achse (6) bewegbaren, von innen nach außen führenden Arm (8) aufweist, der über den Grundriss der Fahrvorrichtung (2) hinausragt und der an seinem Endbereich (9) mit wenigstens einem Reinigungselement (10) ausgestattet ist und die Reinigungsvorrichtung (7) entweder über einen eigenen motorischen Antrieb verfügt oder durch den Bewegungsvorgang der Fahrvorrichtung (2) angetrieben wird.

3. Selbstfahrendes Reinigungsgerät nach Anspruch 1, **dadurch gekennzeichnet, dass** eine Wassersprüheinrichtung (18) vorgesehen ist, die mit der Wasseranschlusseinrichtung (15) verbunden ist

4. Selbstfahrendes Reinigungsgerät nach Anspruch 3, **dadurch gekennzeichnet, dass** die Wasseranschlusseinrichtung (15) ein Endstück (17) aufweist, das geeignet ist, Wasser an die Wassersprüheinrichtung (18) zu verteilen

5. Selbstfahrendes Reinigungsgerät nach Anspruch 1 oder 2, **dadurch gekennzeichnet, dass** es (1) ein Rahmengestell (4) aufweist, auf dem die Reinigungsvorrichtung (7) entweder mit dem Rahmengestell (4) verschraubt oder vom Rahmengestell (4) abnehmbar angeordnet ist.

6. Selbstfahrendes Reinigungsgerät nach Anspruch 1 oder 2, **dadurch gekennzeichnet, dass** sich jeder Arm (8) entweder auf einer geschlossenen Kreisbahn bewegt oder sich oszillierend bewegt.

7. Selbstfahrendes Reinigungsgerät nach Anspruch 1 oder 2, **dadurch gekennzeichnet, dass** die Reinigungsvorrichtung (7) einen nach oben endenden Tragkopf (5) aufweist, an dem jeder Arm (8) angeordnet ist.

8. Selbstfahrendes Reinigungsgerät nach Anspruch 1 oder 2, **dadurch gekennzeichnet, dass** der Endbereich (9) eines jeden Arms (8) mit wenigstens einem Reinigungselement (10) ausgestattet ist.

9. Selbstfahrendes Reinigungsgerät nach Anspruch 8, **dadurch gekennzeichnet, dass** jedes Reinigungselement (10) entweder durch wenigstens einen nach unten hängenden Lappen (11) oder durch wenigstens eine Bürste gebildet ist, wobei sowohl die Lappen (11) als auch die Bürsten ein- oder mehrreihig angeordnet sind.

10. Selbstfahrendes Reinigungsgerät nach Anspruch 8, **dadurch gekennzeichnet, dass** jedes wenigstens eine Reinigungselement (10) einzeln oder zusammen mit weiteren Reinigungselementen (10) in einem Winkel oder bogenförmig zum jeweiligen radial nach außen sich erstreckenden Arm (8) angeordnet ist.

11. Selbstfahrendes Reinigungsgerät nach Anspruch 1 oder 2, **dadurch gekennzeichnet, dass** bei mehr als einem Arm (8) diese (8) durch einen rohr- und ringförmigen Rahmen (12) verbunden sind, wobei der Rahmen (12) wahlweise mit Öffnungen (19) ausgestattet ist, um eine Wassersprüheinrichtung (18) zu bilden.

12. Selbstfahrendes Reinigungsgerät nach Anspruch 1, **dadurch gekennzeichnet, dass** sich jeder Arm (8) entweder horizontal oder leicht nach unten geneigt oder abgewinkelt nach außen erstreckt.

13. Selbstfahrendes Reinigungsgerät nach Anspruch 1, **dadurch gekennzeichnet, dass** jedes wenigstens eine Reinigungselement (10) einzeln oder zusammen mit weiteren Reinigungselementen (10) in einem Winkel oder bogenförmig zum jeweiligen radial nach außen sich erstreckenden Arm (8) angeordnet ist.

14. Selbstfahrendes Reinigungsgerät nach Anspruch 1, **dadurch gekennzeichnet, dass** sich bei einer Ausführung mit nur einem Arm (8) die Wasseranschlusseinrichtung (15) außerhalb des vom Arm (8) beanspruchten Wirkungsbereichs befindet.

15. Selbstfahrendes Reinigungsgerät nach Anspruch 1, **dadurch gekennzeichnet, dass** jeder Arm (8) mit Hilfe einer Steckkupplung lösbar am Tragkopf (5) angeordnet ist.
